Europäisches Patentamt

European Patent Office

Office européen des brevets

(19)

(11) Veröffentlichungsnummer : **0 324 330 B1**

(12) # EUROPÄISCHE PATENTSCHRIFT

(45) Veröffentlichungstag der Patentschrift :
**18.03.92 Patentblatt 92/12**

(51) Int. Cl.$^5$ : **G01N 1/22**

(21) Anmeldenummer : **88890003.2**

(22) Anmeldetag : **11.01.88**

(54) **Vorrichtung zur Entnahme heisser Gasproben aus einem Reaktionsgefäss.**

(43) Veröffentlichungstag der Anmeldung :
**19.07.89 Patentblatt 89/29**

(45) Bekanntmachung des Hinweises auf die
Patenterteilung :
**18.03.92 Patentblatt 92/12**

(84) Benannte Vertragsstaaten :
**AT BE CH DE ES FR GB IT LI**

(56) Entgegenhaltungen :
**EP-A- 0 219 188**
**EP-A- 0 243 570**
**DE-A- 1 949 082**
**DE-A- 3 305 232**
**DE-B- 2 117 796**
**US-A- 4 161 883**

(73) Patentinhaber : **VOEST-ALPINE**
**INDUSTRIEANLAGENBAU GESELLSCHAFT**
**m.b.H.**
**Turmstrasse 44**
**A-4020 Linz (AT)**

(72) Erfinder : **Hölzl, Kurt**
**Wart 35**
**A-4152 Sarleinsbach (AT)**

(74) Vertreter : **Hübscher, Heiner, Dipl.-Ing. et al**
**Spittelwiese 7**
**A-4020 Linz (AT)**

## Beschreibung

Die Erfindung bezieht sich auf eine Vorrichtung zur Entnahme heißer Gasproben aus einem Reaktionsgefäß mit einer Entnahmesonde, die aus einem beheizten Innenrohr zur Gasführung, einem gekühlten Außenmantel und aus einer Wärmeisolierung zwischen Innenrohr und Außenmantel besteht, und mit einem der Entnahmesonde nachgeordneten Filter, das aus einem Filtertopf und einer lösbar in den Filtertopf eingesetzten Filterkerze aufgebaut ist.

Um Reaktionsabläufe in Abhängigkeit von der Zusammensetzung der bei diesen Reaktion entstehenden Heißgase steuern zu können, müssen Gasproben aus dem Reaktionsgefäß abgezogen werden. Aufgrund der hohen Gastemperaturen müssen die für die Probenentnahme vorgesehenen Entnahmesonden mit einer Mantelkühlung versehen werden, die die Gefahr einer Taupunktunterschreitung mit sich bringt, was zu einer unerwünschten Kondensatbildung im Innenrohr der Entnahmesonde führen kann. Diese Kondensatbildung ist insbesondere dann unangenehm, wenn die Gasprobe mit Staub belastet ist, weil sich der mitgeführte Staub mit dem Kondensat zu einem Schlamm verbindet, der an dem Innenrohr der Entnahmesonde anbacken und den freien Strömungsquerschnitt einengen kann. Damit eine solche Taupunktunterschreitung mit einfachen Mitteln vermieden werden kann, ist es bekannt (EP-A-0 243 570), das Innenrohr mit einer Heizung zu versehen und gegenüber dem gekühlten Mantel durch eine Wärmeisolierung abzuschirmen, so daß die sonst auftretende Rückwirkung der Mantelkühlung auf die Temperatur der Innenrohrwandung unterbunden wird und das Innenrohr unabhängig von der Temperatur des gekühlten. Außenmantels in einem gewünschten Temperaturbereich gehalten werden kann. Der mit der Gasprobe entnommene Staub muß in einem der Entnahmesonde nachgeordneten Filter von der Gasprobe abgeschieden werden, wobei wiederum einer Taupunktunterschreitung vorgebeugt werden muß, um ein Verlegen des Filters durch sich bildenden Schlamm zu vermeiden. Trotz der hiefür eingesetzten heizung bleibt jedoch der Wartungsaufwand vergleichsweise hoch, weil sich der Filtertopf des üblicherweise aus diesem Filtertopf un.d einer lösbar eingesetzten Filterkerze bestehenden Filters mit dem zurückgehaltenen Staub füllt und folglich in regelmäßigen Wartungsabständen gereinigt werden muß. Zu diesem Zweck muß einerseits die aus dem Filtertopf entnommene Filterkerze mit Preßluft od. dgl. durchblasen und anderseits der ausgefilterte Staub aus dem Filtertopf händisch entfernt werden.

Bei einer Entnahmevorrichtung für heiße Gasproben ist es außerdem bekannt (EP-A-219 188), den Filtertopf als koaxiale, im Durchmesser erweiterte Verlängerung der Entnahmesonde auszubilden. In die in diese Verlängerung eingesetzte Filterkerze ragt ein Rohrstutzen, durch den einerseits die Gasprobe abgezogen und anderseits Druckluft zur Filterreinigung geblasen werden kann. Nachteilig bei dieser Entnahmesonde ist, daß das Sondengehäuse lediglich auf eine Temperatur oberhalb des Taupunktes des Probengases gekühlt werden darf und daß trotz des koaxial zur Entnahmesonde verlaufenden, der Druckluftführung zur Filterreinigung dienenden Rohrstutzens keine ausreichende Filterreinigung möglich wird, weil die gegen die vordere Stirnfläche der Filterkerze gerichtete Druckluftströmung keine vollständige Staubentleerung des den Rohrstutzen umschließenden Ringraumes zwischen der Filterkerze und dem Filtertopf zuläßt.

Schließlich ist es bei einer anderen Entnahmevorrichtung für heiße Gasproben bekannt (DE-B-2 117 796), ein Keramikfilter der Entnahmesonde vorzusetzen, das einen ein Gasführungsrohr umschließenden Topf bildet und mit hilfe von Druckgas an seiner Außenseite gereinigt werden kann, das durch im wesentlichen aixale Düsen an der Sondenstirnseite über den Filtermantel geblasen. wird. Da dieses Keramikfilter mit Ausnahme einer einseitigen Abdeckung frei über das Sondengehäuse vorragt, ergibt sich hinsichtlich den Staubabfuhr bei einer Filterreinigung keine Schwierigkeit. Den vom Keramikmantel abgeblasene Staub fällt ja unmittelbar in das Reaktionsgefäß zurück. Diese Filteranordnung bedingt jedoch eine hohe Temperaturbelastung und hat den zusätzlichen Nachteil, daß das Filter nun nach einem Ausbau der Entnahmesonde zugänglich wird, so daß sich solche Entnahmevorrichtungen in der Praxis nicht durchsetzen konnten.

Der Erfindung liegt somit die Aufgabe zugrunde, eine Vorrichtung zur Entnahme heißer Gasproben aus einem Reaktionsgefäß der eingangs geschilderten Art mit einfachen Mitteln so zu verbessern, daß der Wantungsaufwand für die Filterreinigung erheblich verringert und die Filterreinigung automatisch durchgeführt werden kann.

Die Erfindung löst die gestellte Aufgabe dadurch, daß der Filtertopf als koaxiale, im Durchmesser erweiterte Verlängerung des Innenrohres der Entnahmesonde ausgebildet und mit einem endseitigen Anschlußflansch für einen die Filterkerze tragenden, lösbaren Filterboden versehen ist, der in den Ringraum zwischen dem Filtertopf und den Filterkerze mündende, an eine Blasleitung anschließbare Blasdüsen aufweist.

Durch die zur Entnahmesonde koaxiale Anordnung des Filtertopfes in Form ein.er Verlängerung des Innenrohres wird die Voraussetzung für eine automatische Filterreinigung geschaffen, weil der im Ringraum zwischen dem Filtertopf und der Filterkerze zurückgehaltene Staub aus dem Filtertopf durch das Innenrohr der Entnahmesonde wieder in das Reaktionsgefäß zurückgeblasen werden kann, und zwar wegen der koaxialen Anordnung von Filtertopf und Entnahmesonde ohne eine die Reinigungswirkung beeinträchtigende Umlenkung des Blasstromes. Dieser Blasstrom wird über die Blasdüsen im Bereich des Filterboden sichergestellt, die in den Ringraum zwischen dem Filtertopf und der Filterkerze münden, so daß dieser Ringraum vollständig durchblasen und rückstandsfrei gereinigt werden kann. Im Zusammenhang mit einem gegebenenfalls erforderlichen Durchblasen der Filterkerze wird folglich eine Filterreinigung gewährleistet, die das sonst notwendige Auseinandernehmen des Filters erübrigt. Außerdem wird mit der Reinigung des Filters zugleich eine Reinigung des Innenrohres der Entnahmesonde erzielt, weil ja der im Filtertopf zurückgehaltene Staub unter einem entsprechenden Druck durch das Innenrohr in das Reaktionsgemäß geblasen wird.

Um mit einfachen Mitteln einen über den Querschnitt des Ringraumes zwischen dem Filtertopf und der Filterkerze gleichmäßig verteilten Blasluftstrom zu erhalten, können die Blasdüsen in weiterer Ausbildung der Erfindung aus mit einem Ringkanal verbundenen Blasöffnungen im Filterboden bestehen.

Im allgemeinen wird die den Filtertopf bildende Verlängerung des Innenrohres der Entnahmesonde sich außerhalb des Reaktionsgefäßes befinden und daher keiner eine Kühlung erfordernden Temperaturbelastung ausgesetzt sein. Trotzdem empfiehlt es sich, die den Filtertopf bildende Verlängerung des Innenrohres der Entnahmesonde durch einen wärmeisolierten Mantel zu umschließen, damit unnötige Wärmeverluste für die Heizung des Filtertopfes vermieden werden.

Obwohl für die regelmäßige Wartung des Filters ein Entnehmen der Filterkerze aus dem Filtertopf nicht notwendig ist, muß der Filtertopf für eine solche Kerzenentnahme zugänglich bleiben. Weist der den Filtertopf umschließende Mantel einen den Filterboden übergreifenden, abnehmbaren, wärmeisolierten Deckel auf, so kann dieser Forderung in einfacher Weise Rechnung getragen werden. Die Anschlüsse für die Blasleitung und die weiterführende Gasleitung können dabei durch den Deckel geführt sein.

In der Zeichnung ist der Erfindungsgegenstand beispielsweise dargestellt. Es zeigen

Fig. 1 eine erfindungsgemäße Vorrichtung zur Entnahme heißer Gasproben aus einem Reaktionsgefäß in einem schematischen Axialschnitt und

Fig. 2 einen Axialschnitt durch den Filterboden in einem größeren Maßstab.

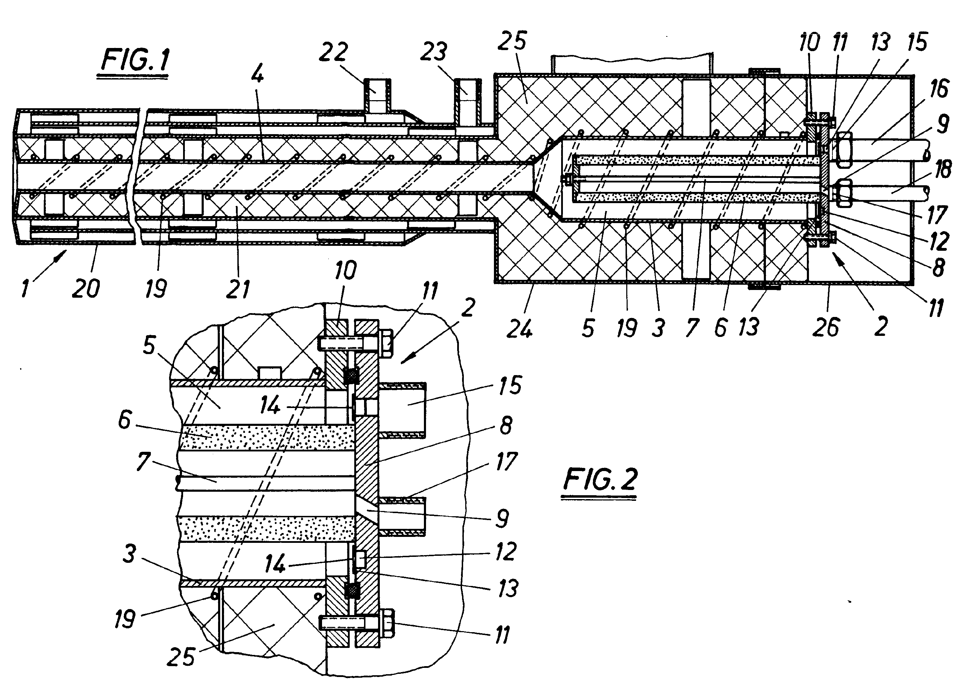

Die dargestellte Vorrichtung besteht im wesentlichen aus einer Entnahmesonde 1 mit einem angeschlossenen Filter 2, dessen Filtertopf 3 durch eine im Durchmesser erweiterte, koaxiale Verlängerung des gasführenden Innenrohres 4 der Entnahmesonde 1 gebildet wird. In diesem Filtertopf 3 ragt unter Freilassung eines Ringraumes 5 eine den eigentlichen Filterkörper bildende Filterkerze 6, die mit Hilfe einer Spannschraube 7 am Filterboden 8 befestigt ist. Dieser Filterboden 8, der innerhalb der Filterkerze 6 eine Durchtrittsöffnung 9 für den Gasaustritt aufweist, ist an einem Anschlußflansch 10 des Filtertopfes 3 mit Hilfe von Schrauben 11 lösbar befestigt und bildet im Bereich des Ringraumes 5 einen Ringkanal 12, der gegen den Ringraum 5 hin durch einen Ring 13 abgedeckt ist, in dem über den Umfang verteilte Blasöffnungen 14 vorgesehen sind, die zur Achse des Filtertopfes 3 parallele Blasdüsen ergeben. Der Ringkanal 12 ist dabei über einen Anschlußstutzen 15 mit einer Blasleitung 16 verbunden, wie dies in Fig. 1 dargestellt ist. Die Durchtrittsöffnung 9 für den Gasaustritt mündet ebenfalls im Bereich eines Anschlußstutzens 17 für eine weiterführende Gasleitung 18.

Wie das Innenrohr 4 der Entnahmesonde ist auch der Filtertopf 3 des Filters 2 mit einer Heizspirale 19 einer elektrischen Widerstandsheizung umschlossen, um eine Taupunktunterschreitung sowohl im Bereich der Entnahmesonde 1 als auch im Bereich des anschließenden Filters 2 zu unterbinden. Die Heizung kann dabei gemeinsam oder getrennt erfolgen.

Zwischen dem Innenrohr 4 der Entnahmesonde 1 und deren Aussenmantel 20 ist eine Wärmeisolierung 21 vorgesehen, damit die Temperatur der Innenrohrwandung unabhängig von der Temperatur des Außenmantels 20 gesteuert werden kann. Der Aussenmantel 20, der ja den heißen Gasen innerhalb des Reaktionsgefäßes ausgesetzt ist, ist mit einer Flüssigkeitskühlung versehen. Zu diesem Zweck ist der Außenmantel 20 doppelwandig ausgeführt und mit einer Kühlflüssigkeitszuleitung 22 sowie einer Kühlflüssigkeitsableitung 23 versehen.

Obwohl der Filtertopf 3 außerhalb des Reaktionsgefäßes zu liegen kommt, ist auch der Filtertopf 3 von einem Außenmantel 24 umschlossen, zwischen dem und dem Filtertopf 3 eine Wärmeisolierung 25 angeordnet ist. Diese Wärmeisolierung 25 unterbindet unnötige Wärmeverluste für die Heizung des Filtertopfes 3. Der wärmeisolierte Mantel 24 ist mit einem stirnseitigen Deckel 26 versehen, der abnehmbar aufgesteckt ist und den Filterboden 8 übergreift. Auch in den Deckel 26 wird eine Wärmeisolierung eingebracht, was jedoch aus Übersichtlichkeitsgründen nicht dargestellt ist.

Die Gasproben werden durch das Innenrohr 4 der Entnahmesonde 1 aus dem Reaktionsgefäß abgezogen und strömen in den Filtertopf 3, wo sie durch die Filterkerze 6 hindurchgesaugt und über die Gasleitung 18 weitergeführt werden. Die dabei aus der Gasprobe ausgefilterten Feststoffe werden im Ringraum 5 zwischen dem Filtertopf 3 und der Filterkerze 6 zurückgehalten und gesammelt, bis eine Staubentleerung des Filters 2 erforderlich wird. Diese Staubentleerung erfolgt mit Hilfe eines Blasstromes, der durch die Blasöffnungen 14 in den Ringraum 5 strömt und den angesammelten Staub gegensinnig zur Gasentnahme aus dem Filtertopf 3 durch das Innenrohr 4 der Entnahmesonde zurück in das Reaktionsgefäß bläst. Zur Reinigung der Filterkerze 6 kann auch über die Gasleitung 18 Druckgas in das Filter geleitet werden, so daß die Filterkerze 6 durchblasen wird. Nach dieser Reinigung des Filters 2 können erneut Gasproben gezogen werden.

**Patentansprüche**

1. Vorrichtung zur Entnahme heißer Gasproben aus einem Reaktionsgefäß mit einer Entnahmesonde (1), die aus einem beheizten Innenrohr (4) zur Gasführung, einem gekühlten Außenmantel (20) und aus einer Wärmeisolierung (21) zwischen Innenrohr (4) und Außenmantel (20) besteht, und mit einem der Entnahmesonde (1) nachgeordneten Filter (2), das aus einem Filtertopf (3) und einer lösbar in den Filtertopf (3) eingesetzten Filterkerze (6) aufgebaut ist, dadurch gekennzeichnet, daß der Filtertopf (3) als koaxiale, im Durchmesser erweiterte Verlängerung des Innenrohres (4) der Entnahmesonde (1) ausgebildet und mit einem endseitigen Anschlußflansch (10) für einen die Filterkerze (6) tragenden, lösbaren Filterboden (8) versehen ist, der in den Ringraum (5) zwischen dem Filtertopf (3) und der Filterkerze (6) mündende, an eine Blasleitung (16) anschließbare Blasdüsen aufweist.

2. Vorrichtung nach Anspruch 1, dadurch gekennzeichnet, daß die Blasdüsen aus mit einem Ringkanal (12) verbundenen Blasöffnungen (14) im Filterboden (8) bestehen.

3. Vorrichtung nach Anspruch 1 oder 2, dadurch gekennzeichnet, daß die den Filtertopf (3) bildende Verlängerung des Innenrohres (4) der Entnahmesonde (1) von einem wärmeisolierten Mantel (24) umschlossen ist.

4. Vorrichtung nach Anspruch 3, dadurch gekennzeichnet, daß der den Filtertopf (3) umschließende Mantel (24) einen den Filterboden (8) übergreifenden, abnehmbaren, wärmeisolierten Deckel (26) aufweist.

**Claims**

1. Apparatus for removing hot gas samples from a reaction vessel having a removal probe (1) consisting of a heated inner tube (4) for the passage of gas, a cooled outer jacket (20) and a thermal insulation (21) between the inner tube (4) and the outer jacket (20), and having a filter (2) following the removal probe (1) and consisting of a filter pot (3) and a filter candle (6) releasably inserted therein, characterised in that the filter pot (3) is formed as a coaxial widened-diameter extension of the inner tube (4) of the removal probe (1) and is provided with a connecting flange (10) at the end for a detachable filter base (8) which carries the filter candle (6) and which has blowing nozzles which are connectable to a blowing line (16) and which lead into the annular space (5) between the filter pot (3) and the filter candle (6).

2. Apparatus according to claim 1, characterised in that the blowing nozzles consist of blowing apertures (14) in the filter base (8), said apertures being connected to an annular duct (12).

3. Apparatus according to claim 1 or 2, characterised in that the extension of the inner tube (4) of the removal probe (1) which forms the filter pot (3) is surrounded by a thermally insulated jacket (24).

4. Apparatus according to claim 3, characterised in that the jacket (24) surrounding the filter pot (3) has a removable thermally insulated cover (26) which engages over the filter base (8).

**Revendications**

1. Dispositif pour prélever des échantillons de gaz chauds dans une cuve de réaction, comprenant une sonde de prélèvement (1) qui est composée d'un tube intérieur chauffé (4) prévu pour le passage des gaz, d'une gaine extérieure refroidie (20) et d'un isolant thermique (21) interposé entre le tube intérieur (4) et la gaine extérieure (20), et un filtre (2), placé en aval de la sonde de prélèvement (1), qui est lui-même composé d'un pot de filtre (3) et d'une bougie filtrante (6) montée amovible dans le pot de filtre (3), caractérisé en ce que le pot de filtre (3) est constitué par un prolongement coaxial, élargi en diamètre, du tube intérieur (4) de la sonde de prélèvement (1) et est muni d'une bride de raccordement terminale (10) destinée à recevoir un fond de filtre amovible (8), qui porte la bougie filtrante (6) et qui présente des buses de soufflage, lesquelles débouchent dans l'espace annulaire (5) compris entre le pot de filtre (3) et la bougie filtrante (6) et peuvent être raccordées à une conduite de soufflage (16).

2. Dispositif selon la revendication 1, caractérisé en ce que les buses de soufflage sont composées d'ouvertures de soufflage (14) pratiquées dans le fond de filtre (8) et qui sont reliées à un canal annulaire (12).

3. Dispositif selon la revendication 1 ou 2, caractérisé en ce que le prolongement du tube intérieur (4) de la sonde de prélèvement (1) qui forme le pot de filtre (3) est entouré d'une gaine (24) isolée de la chaleur.

4. Dispositif selon la revendication 3, caractérisé en ce que la gaine (24) entourant le pot de filtre (3) présente un capot amovible (26) isolé de la chaleur et qui recouvre le fond (8) du filtre.

FIG.1

FIG.2